# EUROPEAN PATENT SPECIFICATION

(11) **EP 2 676 847 B1**
(45) Date of publication and mention of the grant of the patent: **06.01.2016**
(21) Application number: 13171473.5
(22) Date of filing: 11.06.2013
(51) Int. Cl.: B60R 11/02

(54) **In-vehicle display apparatus**
Fahrzeuginterne Anzeigevorrichtung
Appareil d'affichage embarqué

(30) Priority: 21.06.2012 JP 2012140043
(43) Date of publication of application: 25.12.2013
(73) Proprietor: Alpine Electronics, Inc., Tokyo (JP)
(72) Inventor: Otsu, Takeshi, Iwaki-City, Fukushima (JP); Okumura, Kohei, Iwaki-City, Fukushima (JP); Kinoshita, Yoshihisa, Iwaki-City, Fukushima (JP); Bauer, Alexander, 70567 Stuttgart (DE)
(74) Representative: Klunker . Schmitt-Nilson . Hirsch

(56) References cited:
- WO-A1-2012/070210
- DE-A1-102008 051 153
- US-A1- 2005 056 734
- US-A1- 2008 083 863

## Description

The present invention relates to an in-vehicle display apparatus including a display panel that retracts into an opening formed in an installation member in a vehicle interior and that protrudes from the opening for use so as to be viewed by an occupant.

To date, an in-vehicle display apparatus is known in which a movable body is housed in an installation member, such as an instrument panel, and a display panel is attached to the movable body. The display panel is caused to protrude from an opening formed in the installation member in an erect position by moving the movable body in such a direction as to cause the movable body to protrude using a driving mechanism installed in the installation member (see JP 2008-74303 A, for example).

In such an in-vehicle display apparatus, the movable body moves back or forth from/to a retraction position to/from a protrusion position in accordance with a direction of rotation of a motor, which is a driving source of the driving mechanism. When the motor rotates in one direction while the movable body is in the retraction position in the opening, the movable body moves toward the protrusion position and protrudes from the opening. Thus, the display panel attached to one end portion of the movable body faces an occupant so that the occupant can use the display panel. When the motor rotates in the other direction while the movable body is in the protrusion position, the movable body moves toward the retraction position and retracts into the opening. Thus, the display panel is hidden in the installation member so that the occupant cannot use the display panel.

As in the case of the above-described existing in-vehicle display apparatus, an in-vehicle display apparatus in which the display panel protrudes from the opening of the installation member in an erect position during use causes the following inconvenience. When an occupant, in a moving vehicle, hits his/her head or another body part against the display panel as a result of sudden braking or the like, the movable body supporting the display panel may break off due to the impact and the broken-off pieces may fly away or lower end portions of the movable body and the display panel that have fallen to the front of the vehicle interior due to the impact may come off the opening of the installation member and be exposed to the vehicle interior. In this case, even when the movable body breaks off due to the impact, if the movable body is prevented from flying away or the lower end surface of the display panel is prevented from being exposed to the outside, the safety of an occupant can be improved. Thus, such a safety measure is desirable.

WO 2012/070210 A1 discloses a display device comprising a display that is capable of moving between an unused position and a used position, a flap that is capable of moving between a closed position and an open position, and a concertina-like cover that seals a gap formed when the display moves. In this case, although the size of the gap formed when the display moves changes according to the movement of the display, the size of the concertina-like cover is variable according to the change in the size of the gap.

An object of the present invention is to provide an in-vehicle display apparatus that is very safe for occupants.

The object is solved by the features of the independent claims. Further embodiments and aspects are defined in the dependent claims. Further examples are provided for facilitating the understanding of the invention.

An in-vehicle display apparatus according to an aspect of the invention includes a movable body that is retractable into and withdrawable from an opening formed in an installation member in a vehicle interior; a display panel having a rectangular shape and attached to a support board of the movable body; and a driving mechanism that moves the movable body between a retraction position, in which the movable body is in the opening, and a protrusion position, in which the movable body protrudes from the opening, the display panel protruding from the opening in an erect position in which the display panel faces the vehicle interior while the movable body is in the protrusion position. The support board has a readily breakable portion that has a lower mechanical strength than other portions of the the support board and that extends substantially parallel to a lower edge of the display panel. A spring member is disposed so as to cross the readily breakable portion. End portions of the spring member are hooked on the movable body at two regions separated by the readily breakable portion.

In the in-vehicle display apparatus according to the above-described aspect, when an occupant hits his/her head or another body part against the display panel held in an erect position, the support board of the movable body falls to the front of the vehicle interior due to an impact that the support board has received, and then the support board breaks off along the readily breakable portion. Then, the broken-off portion of the support board and the display panel moves forward and protrude from the opening of the installation member. Thus, the spring member hooked on the movable body so as to cross the readily breakable portion is stretched. Consequently, the display panel, which has fallen forward, instantaneously returns to an erect position upon receiving the spring force of the spring member. The lower end surface of the display panel no longer faces the occupant by, for example, retracting into the opening again, thereby improving the safety of the occupant.

In the above configuration, the spring member may be provided in a plurality and the spring members may be helical extension springs disposed inward from both side edges of the display panel. In this case, the helical extension spring can be readily mounted on the movable body and the display panel that has fallen forward upon receiving an impact can be reliably brought back to an original erect position.

Here, two end portions of the helical extension spring may be hooked at two regions on upper and lower areas of the support board vertically divided by the readily breakable portion. Instead, the movable body may include a base portion that protrudes from a lower end portion of a rear surface of the support board and two end portions of the helical extension spring may be hooked on a portion of the support board above the readily breakable portion and on the base portion, respectively. In this case, the helical extension spring can increase its spring force with which the display panel is brought back to the erect position.

In the above configuration, a stretchable sheet may be interposed between the support board and the display panel so as to extend across the readily breakable portion, and the stretchable sheet may be fixed to at least two regions separated by the readily breakable portion of the movable body. In this case, not only the spring member but also the stretchable sheet is stretched when the movable body receives an impact. Thus, the break-off portion of the movable body remains connected to the spring member and the stretchable sheet, thereby reliably preventing the broken-off portion of the support board and the display panel from moving away from the movable body and flying into the vehicle interior.

Here, a protection sheet may be interposed between the support board and the stretchable sheet so as to extend across the readily breakable portion and only one side of the protection sheet may be fixed to the movable body, the one side being defined with respect to the readily breakable portion. In this case, if the support board of the movable body breaks off along the readily breakable portion, the protection sheet comes into contact with the broken-off surface to prevent the stretchable sheet from coming into contact with the broken-off surface, thereby reliably preventing the stretchable sheet from being torn.

In the above-described configuration, the readily breakable portion may be multiple continuous perforations or a long hole or the like having a slit form formed on the support board. Alternatively, the readily breakable portion may be a long groove formed on an inner surface of the support board and having a recess-shaped cross section. The readily breakable portion formed by a long groove is advantageous with regard to the production process because the long groove can be included in the shape of the die used to form a die casting or the like, as well as with regard to appearance because the readily breakable portion is not exposed to the outside.

In the in-vehicle display apparatus according to an embodiment, the support board of the movable body has a readily breakable portion that extends substantially parallel to the lower edge of the display panel. When an occupant hits his/her head or another body part against the display panel held in an erect position, the support board of the movable body falls to the front of the vehicle interior due to the impact and breaks off along the readily breakable portion. Concurrently, the spring member hooked on the movable body so as to cross the readily breakable portion is stretched. Consequently, the display panel, which has fallen forward, instantaneously returns to an erect position upon receiving the spring force of the spring member. The lower end surface of the display panel no longer faces the occupant by, for example, retracting into the opening again, thereby improving the safety of the occupant.

### BRIEF DESCRIPTION OF THE DRAWINGS

Fig. 1 is a side view of an in-vehicle display apparatus according to an embodiment of the invention during use;
Fig. 2 is a perspective view of a movable body included in the in-vehicle display apparatus;
Fig. 3 is a perspective view of the movable body when viewed from the rear side;
Fig. 4 is a perspective view of the movable body from which a display panel is excluded;
Fig. 5 is an exploded perspective view of the movable body;
Fig. 6 is a side view of the in-vehicle display apparatus that is in a retraction state;
Fig. 7 is a side view of the in-vehicle display apparatus in the course of being moved;
Fig. 8 illustrates how the movable body falls upon receiving an impulsive force;
Fig. 9 illustrates how the movable body falls upon receiving an impulsive force; and
Fig. 10 illustrates how the movable body falls upon receiving an impulsive force.

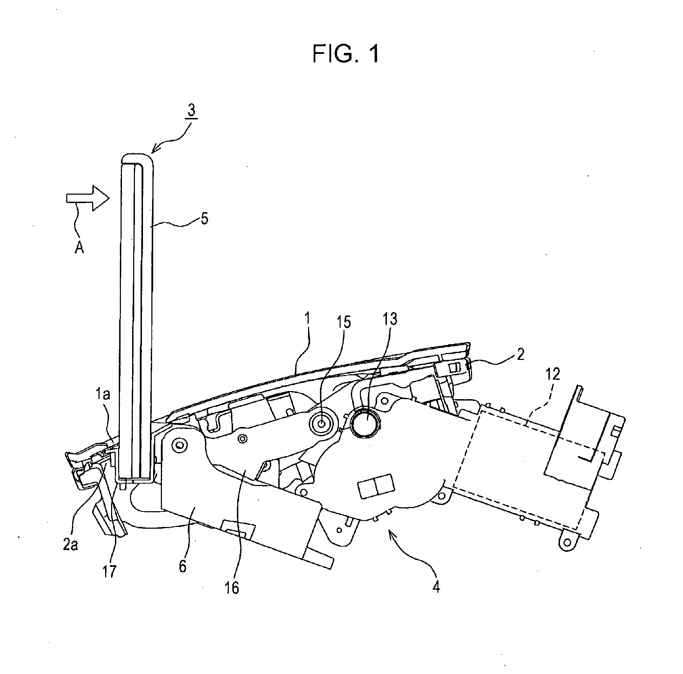

An embodiment of the present invention is described with reference to the drawings. As illustrated in Fig. 1, an in-vehicle display apparatus according to the embodiment includes a chassis 2 fixed to the rear surface of the installation member 1 in the vehicle interior, a movable body 3 that can protrude from and retract into an opening 1a formed in the installation member 1, and a driving mechanism 4 that moves the movable body 3 between a retraction position, in which the movable body 3 is in the opening 1a, and a protrusion position, in which the movable body 3 protrudes from the opening 1a. The installation member 1 is a dashboard disposed below a front glass in front of a driver's seat. The horizontally extending opening 1a is formed on the upper surface of the installation member 1. The chassis 2 is fixed to the rear surface of the installation member 1 via a screw or by other means. The chassis 2 has a connection hole 2a that is continuous with the opening 1a of the installation member 1.

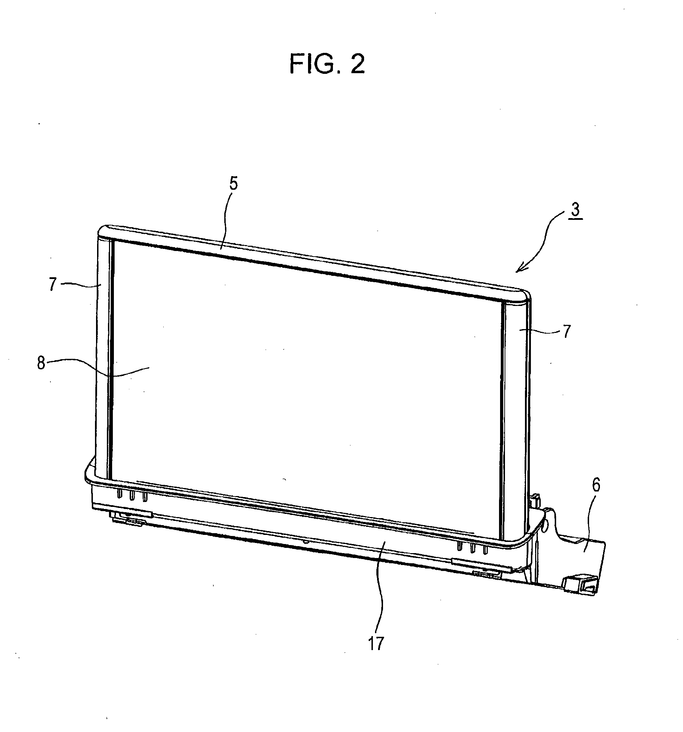

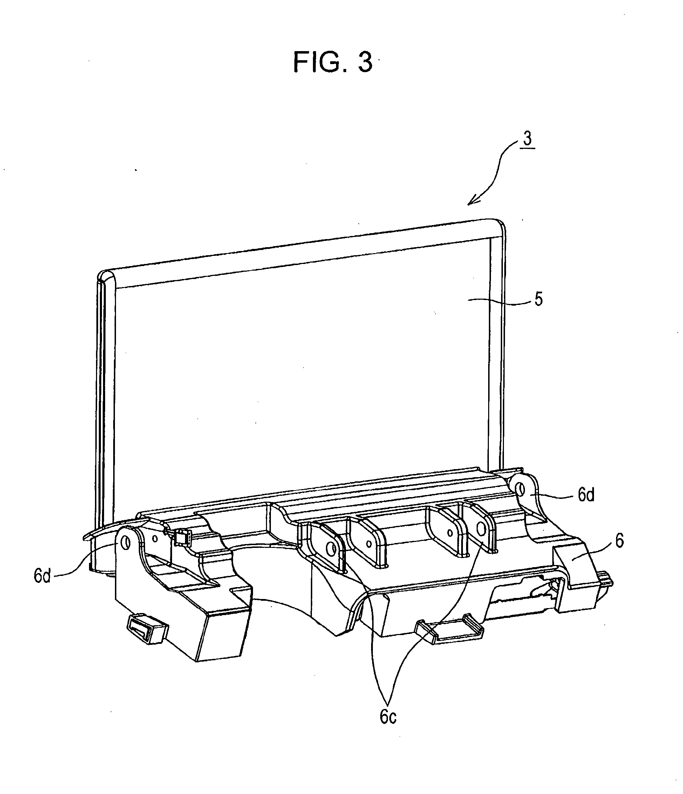

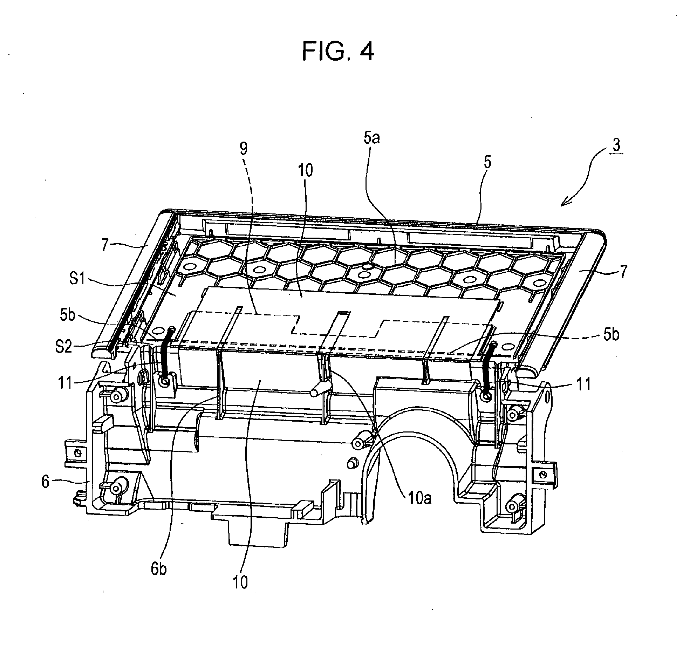

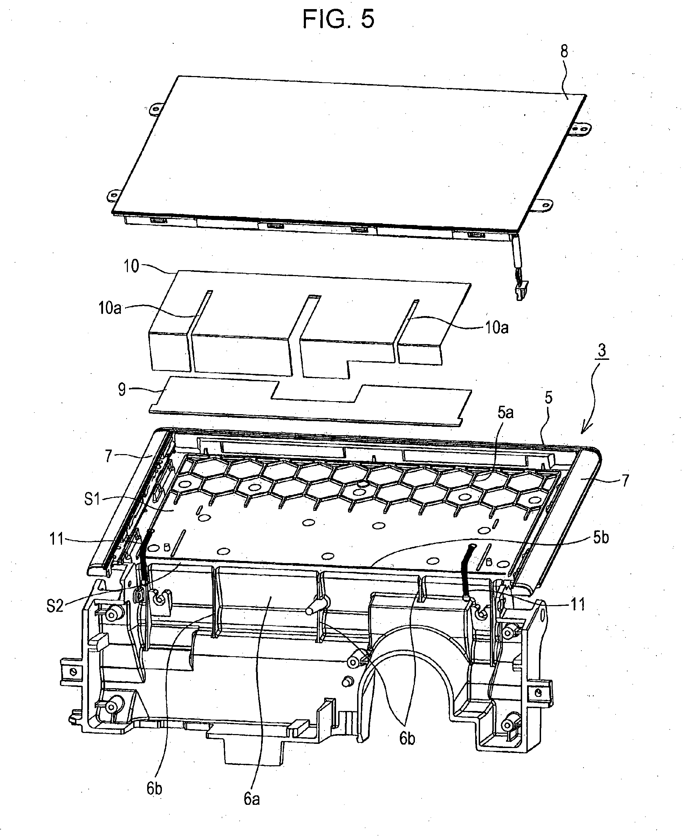

As illustrated in Figs. 2 to 5, the movable body 3 includes a support board 5 and a base portion 6, which are integrally formed into a magnesium die casting or the like. The support board 5 has a rectangular shape. Decorative boards 7 made of a synthetic resin are attached to the left and right of the support board 5. An edge portion of a rectangular display panel 8 is fixed to an edge portion of the support board 5. An inner surface (front surface) of the support board 5 faces a rear surface of the display panel 8 with a gap therebetween. The display panel 8 is a liquid crystal display (LCD). Three sides of the display panel 8 excluding a bottom side are covered by an upper edge portion of the support board 5 and the decorative boards 7. A large number of reinforcement ribs 5a are formed in a honeycomb pattern on an upper side of the inner surface of the support board 5 to increase the mechanical strength of the support board 5. In addition, a readily breakable portion 5b that extends substantially parallel to the lower side of the display panel 8 is formed on the inner surface of the support board 5. The readily breakable portion 5b divides the inner surface of the support board 5 into a wide upper area S1 and a narrow lower area S2. The readily breakable portion 5b is a long groove that extends in the left-right direction of the support board 5 and has a recess-shaped cross section. The mechanical strength of the readily breakable portion 5b is lower than that of other portions.

The base portion 6 protrudes from a lower end portion of the rear surface of the support board 5 so as to be substantially orthogonal to the support board 5. A flat sheet receivable portion 6a is formed on the inner surface of the base portion 6 around a junction between the base portion 6 and the support board 5. Multiple protruding ribs 6b are formed in the sheet receivable portion 6a to increase the strength around the sheet receivable portion 6a. First bearing portions 6c and second bearing portions 6d are formed on the outer surface of the base portion 6. The first and second bearing portions 6c and 6d are pivotally supported by driving arms 14 and restricting arms 16 of the driving mechanism 4, which are described below, so as to be rotatable.

A protection sheet 9 and a stretchable sheet 10 are disposed on the inner surface of the support board 5 in a stacked manner. A main portion of the readily breakable portion 5b excluding both end portions is covered by the protection sheet 9 and the stretchable sheet 10. The protection sheet 9 is made of a material such as para-aramid fibers, which have excellent mechanical properties such as strength or a modulus of elasticity. The lower side of the protection sheet 9 is fixed (bonded) to the lower area S2 of the support board 5 via means such as an adhesive or an adhesive tape, but the protection sheet 9 is not bonded to the upper area S1 of the support board 5. Here, the protection sheet 9 is only required to be fixed to one of two regions separated by the readily breakable portion 5b. Thus, the protection sheet 9 having a portion bonded to the sheet receivable portion 6a of the base portion 6 may extend to the upper area S1 across the readily breakable portion 5b or the protection sheet 9 having a portion bonded to the upper area S1 may extend to the lower area S2 or the sheet receivable portion 6a across the readily breakable portion 5b.

The stretchable sheet 10 is a sheet member having excellent tensile strength or elasticity, such as a sheet obtained by three-dimensionally fusing an elastomer and a nonwoven fabric made of polyester fibers or polyurethane fibers or a composite sheet obtained by integrating an elastic sheet having a stretch property and a nonelastic fiber aggregate having a stretch property together in a stacked manner. In this embodiment, "ECSAINE"® of Toray Industries, Inc. is used as the stretchable sheet 10. The stretchable sheet 10 covers the protection sheet 9 and extends from the upper area S1 of the support board 5 to the sheet receivable portion 6a of the base portion 6. Upper and lower end portions of the stretchable sheet 10 are bonded to the upper area S1 and the sheet receivable portion 6a, respectively. A middle portion of the stretchable sheet 10 excluding the upper and lower end portions, that is, a portion that overlaps the protection sheet 9, which extends across the readily breakable portion 5b is an unbonded portion that is not bonded to the support board 5. The stretchable sheet 10 has multiple slits 10a, which extend from the bottom edge of the stretchable sheet 10 toward the top edge. The protruding ribs 6b that protrude from the sheet receivable portion 6a are inserted into the slits 10, so that the protruding ribs 6b do not interfere with the stretchable sheet 10 when the lower end side of the stretchable sheet 10 is to be bonded to the sheet receivable portion 6a of the base portion 6. For this reason, if there is no protrusion, such as the protruding ribs 6b, in a portion to which the stretchable sheet 10 is bonded, the stretchable sheet 10 may not include the slits 10a. The stretchable sheet 10 is only required to be fixed to two regions separated by the readily breakable portion 5b. If the lower area S2 of the support board 5 has such a wide space as to allow the stretchable sheet 10 to be bonded thereto, the upper and lower end portions of the stretchable sheet 10 may be bonded to the upper area S1 and the lower area S2, respectively.

Helical extension springs 11 are stretched across uncovered portions of the readily breakable portion 5b on the left and right sides of the stretchable sheet 10. End portions of each helical extension spring 11 are hooked on the upper area S1 of the support board 5 and the sheet receivable portion 6a of the base portion 6, respectively. Specifically, each helical extension spring 11 is stretched over continuous bent surfaces of the support board 5 and the sheet receivable portion 6a so as to be substantially L-shaped. Here, it is only required that each helical extension spring 11 be hooked on two regions separated by the readily breakable portion 5b. Thus, if the lower area S2 of the support board 5 is wide enough to allow one end portion of each helical extension spring 11 to be hooked thereon, the end portions of the helical extension spring 11 may be hooked on the upper area S1 and the lower area S2 so that the helical extension spring 11 forms a straight line.

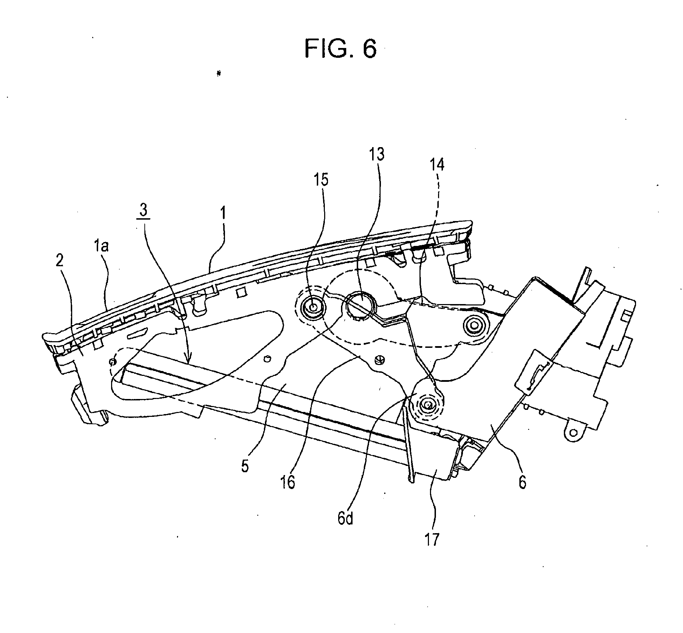

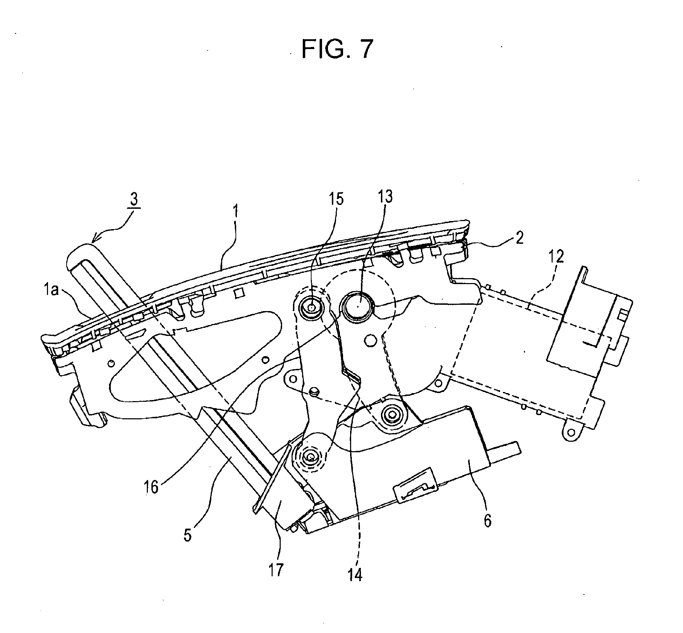

As illustrated in Figs. 6 and 7, the driving mechanism 4 mainly includes a motor 12 attached to a rear portion on the back surface of the chassis 2, driving arms 14 rotatably supported by a shaft 13 of the chassis 2, and restricting arms 16 rotatably supported by a shaft 15 of the chassis 2. Rotation of the motor 12 is transmitted to the driving arms 14 via a deceleration gear train or a clutch gear, which is not illustrated. One end portion of each driving arm 14 is connected to a corresponding one of the first bearing portions 6c of the base portion 6. The movable body 3 (the support board 5 and the base portion 6) moves between the retraction position and the protrusion position, which are described below, in accordance with a swing of the driving arms 14. One end portion of each restricting arm 16 is connected to a corresponding one of the second bearing portions 6d of the base portion 6. Thus, the restricting arms 16 restrict the orientation of the movable body 3 while the movable body 3 is moving. Although not illustrated, an openable cover that covers the connection hole 2a is held by the chassis 2. This cover slides in accordance with a swing of the restricting arms 16. A protection cap 17 made of a synthetic resin is attached to lower end portions of the support board 5 and the display panel 8 to cover the lower end side of the display panel 8.

Fig. 6 illustrates the state where the movable body 3 is in the retraction position, in which the movable body 3 retracts into the opening 1a. Here, the opening 1a and the connection hole 2a are covered by the above-described cover. When the motor 12 rotates in a first direction from this state, the driving arms 14 swing in the clockwise direction of Fig. 6. Thus, the movable body 3 starts moving along a rotation track of the restricting arms 16 as illustrated in Fig. 7. At the same time, in accordance with the rotation of the restricting arms 16, the cover slides in such a direction as to open the opening 1a and the connection hole 2a and thus the upper side of the support board 5 and the upper side of the display panel 8 protrude from the opening 1a to the vehicle interior. When the motor 12 continues rotating in the same direction, the driving arm 14 pushes the base portion 6 in such a direction as to cause the support board 5 to protrude. Thus, as illustrated in Fig. 1, a large part of the support board 5 and a large part of the display panel 8 protrude from the opening 1a. When the motor 12 stops rotating at this time, the movable body 3 is held in the protrusion position in which the display panel 8 faces the vehicle interior, so that an occupant in the vehicle interior can see an image displayed on a display screen of the display panel 8. In addition, when the motor 12 rotates in a second direction while the movable body 3 is in the protrusion position illustrated in Fig. 1, the driving arms 14 swing in the counterclockwise direction of Fig. 6 and draw the base portion 6 back in such a direction as to retract the base portion 6. Thus, the movable body 3 retracts into the opening 1a and returns to the retraction position illustrated in Fig. 6.

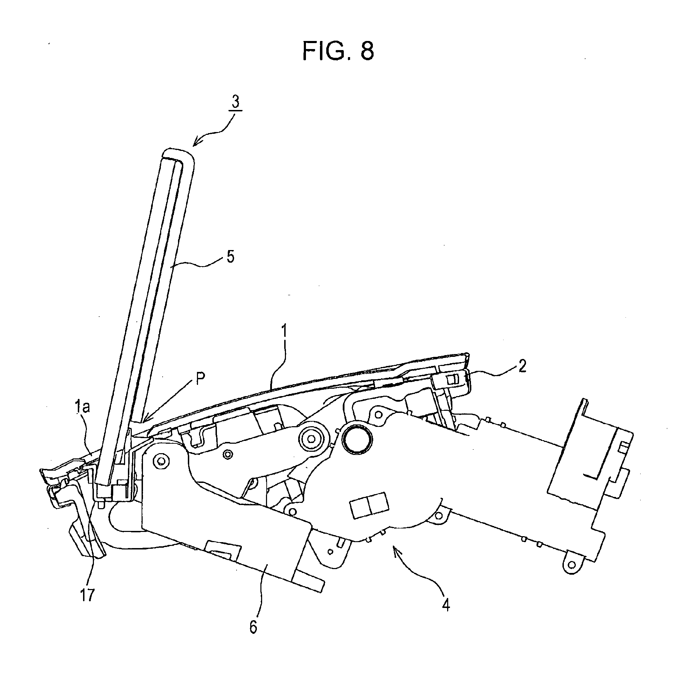

While the in-vehicle display apparatus having the above structure is in a use state in which the support board 5 of the movable body 3 and the display panel 8 protrude from the opening 1a, if, for example, an occupant in a moving vehicle hits his/her head or another body part against the display panel 8 due to a sudden braking, a large impulsive force directed toward the front of the vehicle interior is exerted on the support board 5 that holds the display panel 8, as indicated by arrow A of Fig. 1. Consequently, as illustrated in Fig. 8, the support board 5 falls to the front of the vehicle interior due to the impact and breaks off along the readily breakable portion 5b, so that the upper area S1 of the support board 5 holding the display panel 8 and the lower area S2 of the support board 5 that is continuous with the base portion 6 become disconnected from each other at the broken-off point P.

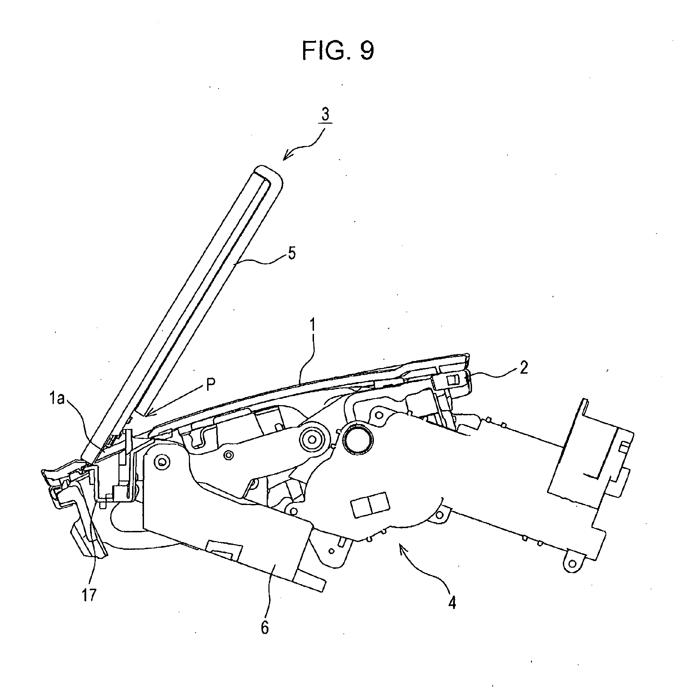

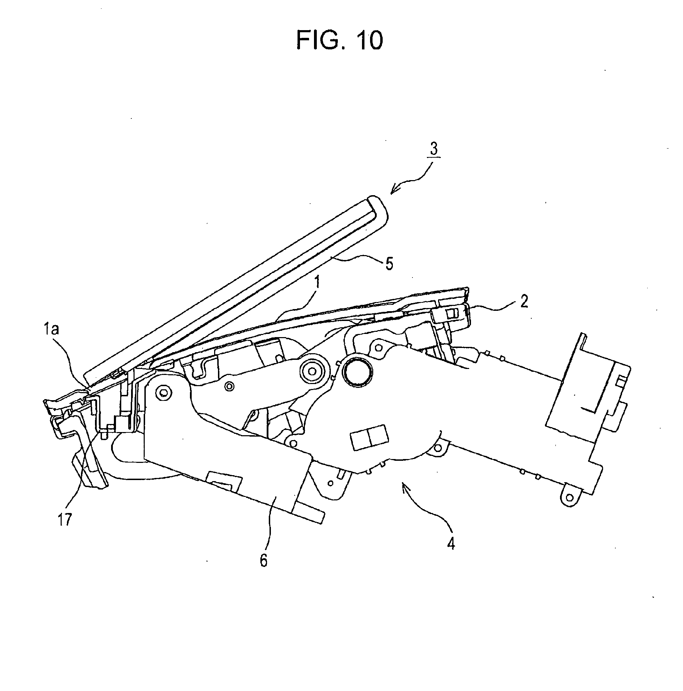

The stretchable sheet 10 is interposed between the support board 5 and the display panel 8 so as to extend across the readily breakable portion 5b. The upper and lower end portions of the stretchable sheet 10 are bonded to the upper area S1 of the support board 5 and the sheet receivable portion 6a of the base portion 6, respectively. Thus, the stretchable sheet 10 is stretched while being fixed to the upper area S1 of the broken-off support board 5 and the upper area S1 of the broken-off support board 5 and the display panel 8 slide forward (obliquely upward to the right in Fig. 8) a distance equivalent to the amount by which the stretchable sheet 10 is stretched. Since the broken-off portion of the support board 5 remains connected to the stretchable sheet 10, the broken-off portion of the support board 5 and the display panel 8 can be prevented from flying into the vehicle interior. Moreover, since the broken-off portion of the support board 5 and the display panel 8 fall while sliding forward (obliquely upward), the lower end portions of the support board 5 and the display panel 8 become detached from the protection cap 17 as illustrated in Fig. 9 and then protrude from the opening 1a of the installation member 1 as illustrated in Fig. 10. Accordingly, the lower end portions of the support board 5 and the display panel 8 are prevented from entering a portion under the installation member 1 near the opening 1a (to the left in Fig. 9) and thus from raising a portion of the installation member 1 around the opening 1a as a result of the fall of the broken-off portion of the support board 5 and the display panel 8. Thus, the portion of the installation member 1 around the opening 1a can be prevented from being deformed or damaged.

Moreover, the protection sheet 9 is interposed between the support board 5 and the stretchable sheet 10 so as to extend across the readily breakable portion 5b and the lower side of the protection sheet 9 is bonded to the lower area S2 of the support board 5. Thus, when the support board 5 breaks off along the readily breakable portion 5b, the protection sheet 9 covers the broken-off surface to prevent the stretchable sheet 10 from coming into contact with the broken-off surface. Consequently, the stretchable sheet 10 does not come into direct contact with the sharp broken-off surface at the broken-off point P, thereby preventing the broken-off surface of the support board 5 from tearing the stretchable sheet 10.

In addition, a pair of helical extension springs 11 are interposed between the support board 5 and the display panel 8 so as to cross the readily breakable portion 5b and the end portions of each helical extension spring 11 are hooked on the upper area S1 of the support board 5 and the sheet receivable portion 6a of the base portion 6, respectively. Thus, when the upper area S1 of the support board 5 disconnected from the lower area S2 due to an impact moves forward together with the display panel 8, not only the stretchable sheet 10, but also the helical extension springs 11 are stretched while being hooked on the upper area S1 of the support board 5. The support board 5, which has broken off due to an impact, and the display panel 8 fall while sliding forward as illustrated in Fig. 10, and then instantaneously return to an erect position illustrated in Fig. 1 upon receiving the spring force of the helical extension springs 11. Thus, the lower end portions of the support board 5 and the display panel 8, which are protrusions, return to the inside of the opening 1a to be held in the protection cap 17 and do not face the occupant. In addition, the broken-off portion of the support board 5 remains connected to the stretchable sheet 10 and the helical extension springs 11 at three points, thereby more reliably preventing the broken-off portion of the support board 5 and the display panel 8 from flying away.

As described above, in the in-vehicle display apparatus according to the embodiment, the support board 5 of the movable body 3 holding the display panel 8 has a readily breakable portion 5b. When an occupant hits his/her head or another body part against the display panel 8 protruding from the opening 1a of the installation member 1 and held in the erect position, the support board 5 falls forward due to the impact and breaks off along the readily breakable portion 5b. End portions of each helical extension springs 11 disposed on the back surface of the display panel 8 are hooked on two regions (the upper area S1 of the support board 5 and the sheet receivable portion 6a of the base member 6) that are separated by the readily breakable portion 5b and the helical extension springs 11 are stretched while being hooked on the upper area S1 of the broken-off support board 5. Thus, the support board 5 and the display panel 8, which have fallen forward, instantaneously return to an erect position upon receiving the spring force of the helical extension springs 11. The lower end surfaces of the support board 5 and the display panel 8 face downward away from an occupant. Then, the support board 5 and the display panel 8 retract into the opening 1a again and are no longer exposed to the occupant. Further, since the broken-off portion of the support board 5 remains connected to the helical extension springs 11, the broken-off portion of the support board 5 and the display panel 8 can be prevented from flying into the vehicle interior, thereby improving the safety of an occupant.

In addition, in the embodiment, the movable body 3 has a base portion 6 that protrudes from a lower end portion of the rear surface of the support board 5, and the upper area S1 of the support board 5 and the sheet receivable portion 6a of the base portion 6, on both of which the helical extension springs 11 are hooked, are substantially orthogonal to each other. Thus, the helical extension springs 11 are L-shaped when viewed from the side. Consequently, the helical extension springs 11 can bring the broken-off portion of the support board 5 and the display panel 8 back to the erect position using a larger spring force than that in the case where both end portions of each helical extension spring 11 are hooked on the same plane.

In this embodiment, the stretchable sheet 10 is interposed between the support board 5 and the display panel 8 so as to extend across the readily breakable portion 5b and is bonded to two regions separated by the readily breakable portion 5b (the upper area S1 of the support board 5 and the sheet receivable portion 6a of the base portion 6). Thus, when the broken-off portion of the support board 5 and the display panel 8 move forward, not only the helical extension springs 11 but also the stretchable sheet 10 is stretched. As described above, since the broken-off portion of the support board 5 remains connected to the helical extension springs 11 and the stretchable sheet 10, the broken-off portion of the support board 5 and the display panel 5 can be more reliably prevented from flying away.

In the embodiment, the protection sheet 9 is interposed between the support board 5 and the stretchable sheet 10 so as to extend across the readily breakable portion 5b and the lower side of the protection sheet 9 is bonded to the lower area S2 of the support board 5. Thus, when the support board 5 breaks off along the readily breakable portion 5b, the protection sheet 9 covers the broken-off surface to prevent the broken-off surface from coming into contact with the stretchable sheet 10. Consequently, the stretchable sheet 10 can be prevented from coming into direct contact with the sharp broken-off surface at the broken-off point P and the protection sheet 9 prevents the stretchable sheet 10 from being torn. Thus, the stretchable sheet 10 can be reliably stretched.

In the embodiment, the inner surface of the support board 5 has a long groove having a recess-shaped cross section, which is used as the readily breakable portion 5b. Since the readily breakable portion 5b is not exposed to the outside, the readily breakable portion 5b is advantageous with regard to appearance. Moreover, the readily breakable portion 5b is advantageous with regard to the production process because the long groove (readily breakable portion 5b) can be included in the shape of the die used when the support board 5 and the base portion 6 are integrally formed into a magnesium die casting or the like.

In this embodiment, the helical extension springs 11 are used as spring members and are disposed at positions on sides inward from both side edges of the display panel 8. Thus, the helical extension springs 11 can be readily installed at predetermined positions of the movable body 3 and the support board 5 and the display panel 8 that have fallen forward due to an impact can be reliably brought back to the original erect position. Here, the number of helical extension springs 11 or the positions at which the helical extension springs 11 are installed can be appropriately changed. For example, three helical extension springs 11 may be disposed in a middle portion and both side portions of the display panel 8. Alternatively, helical torsion springs or other types of springs may be used as spring members instead of the helical extension springs 11.

In the embodiment, the movable body 3 is moved by the driving mechanism 4 including the motor 12, serving as a driving source, and the driving arms 14 rotated by the motor 12. However, the driving mechanism 4 may be configured differently as long as it can move the movable body 3 between the retraction position and the protrusion position.

## Claims

1. An in-vehicle display apparatus including a movable body (3) that is retractable into and withdrawable from an opening (1a) formed in an installation member (1) in a vehicle interior and includes a support board (5) and a base portion (6) protruding from a lower end portion of the support board (5); a display panel (8) having a rectangular shape and attached to a support board (5) of the movable body (3); and a driving mechanism (4) that moves the movable body (3) between a retraction position, in which the movable body (3) is in the opening (1a), and a protrusion position, in which the movable body (3) protrudes from the opening (1a) in an erect position in which the display panel (8) faces the vehicle interior,
the in-vehicle display apparatus **characterized in that**
the support board (5) has a readily breakable portion (5b) that has a lower mechanical strength than other portions of the the support board (5) and extends substantially parallel to a lower edge of the display panel (8),
a spring member (11) is disposed so as to cross the readily breakable portion (5b), and
a first end portion of the spring member (11) is hooked on an upper area (S1) of the support board (5) and a second end portion of the spring member (11) is hooked on the base portion (6), or on a lower area (S2) of the support board (5), which is separated from the upper area (S1) by the readily breakable portion (5b).

2. The in-vehicle display apparatus according to Claim 1, **characterized in that** the spring member (11) is provided in a plurality and the spring members (11) are helical extension springs disposed inward from corresponding side edges of the display panel (8).

3. The in-vehicle display apparatus according to Claim 2, **characterized in that**
the base portion (6) protrudes from a lower end portion of a rear surface of the support board (5), and
first end portions of the helical extension springs (11) are hooked on the support board (5) at a first region (S1) and second end portions of each helical extension springs (11) are hooked on the base portion (6) at the second region (S2), respectively.

4. The in-vehicle display apparatus according to any one of Claims 1 to 3, **characterized in that**
a stretchable sheet (10) is interposed between the support board (5) and the display panel (8) so as to extend across the readily breakable portion (5b), and
the stretchable sheet (10) is fixed to the movable body (3) at at least two regions separated by the readily breakable portion (5b).

5. The in-vehicle display apparatus according to Claim 4, **characterized in that**
a protection sheet (9) is interposed between the support board (5) and the stretchable sheet (10) so as to extend across the readily breakable portion (5b), and
only one side of the protection sheet (9) is fixed to the movable body (3), the one side being defined with respect to the readily breakable portion (5b).

6. The in-vehicle display apparatus according to any one of Claims 1 to 5, **characterized in that** the readily breakable portion (5b) is a long groove formed on an inner surface of the support board (5) and having a recess-shaped cross section.

## Patentansprüche

1. Eine Anzeigevorrichtung in einem Fahrzeug mit einem beweglichen Körper (3), der in eine Öffnung (1a), die in einem Installationselement (1) eines Fahrzeuginnenraums ausgebildet ist, hereinziehbar und daraus herausziehbar ist, und der eine Trägerplatte (5) und einen Basisbereich (6) aufweist, der von einem unteren Endbereich der Trägerplatte (5) hervorsteht, mit einer Anzeigetafel (8), die eine rechteckige Form hat und die an der Trägerplatte (5) des beweglichen Körpers (3) angebracht ist; und mit einem Antriebsmechanismus (4), der den beweglichen Körper (3) zwischen einer zurückgezogenen Position, in der sich der bewegliche Körper (3) in der Öffnung (1a) befindet, und einer hervorragenden Position, in der der bewegliche Körper (3) in einer aufrechten Position, in der die Anzeigetafel (8) dem Fahrzeuginnenraum zugewandt ist, aus der Öffnung (1a) hervorragt, bewegt,
wobei die Anzeigevorrichtung in einem Fahrzeug **dadurch gekennzeichnet ist, dass**
die Trägerplatte (5) einen leicht zerbrechlichen Bereich (5b) aufweist, der eine geringere mechanische Stärke als andere Bereiche der Trägerplatte (5) hat, und der sich im Wesentlichen parallel zu einem unteren Rand der Anzeigetafel (8) erstreckt,
ein Federelement (11) so angeordnet ist, das es über den leicht zerbrechlichen Bereich (5b) verläuft, und
ein erster Endbereich des Federelements (11) in einen oberen Bereich (S1) der Trägerplatte (5) eingehakt ist, und eine zweiter Endbereich des Federelements (11) in den Basisbereich (6) oder in einen unteren Bereich (S2) der Trägerplatte (5), der durch den leicht zerbrechlichen Bereich (5b) von dem oberen Bereich (S1) getrennt ist, eingehakt ist.

2. Die Anzeigevorrichtung in einem Fahrzeug nach Anspruch 1, **dadurch gekennzeichnet, dass** das Federelement (11) mehrfach vorhanden ist und die Federelemente (11) Spiralfedern sind, die innerhalb korrespondierender Seitenränder der Anzeigetafel (8) angeordnet sind.

3. Die Anzeigevorrichtung in einem Fahrzeug nach Anspruch 2, **dadurch gekennzeichnet, dass**
der Basisbereich (6) von einem unteren Endbereich einer Rückseite der Trägerplatte (5) hervorsteht, und
erste Endbereiche der Spiralfedern (11) in einem ersten Bereich (S1) auf der Trägerplatte (5) eingehakt sind, und zweite Endbereiche jeder Spiralfeder (11) in dem zweiten Bereich (S2) auf dem Basisbereich (6) eingehakt sind.

4. Die Anzeigevorrichtung in einem Fahrzeug nach einem der Ansprüche 1 bis 3, **dadurch gekennzeichnet, dass**
zwischen der Trägerplatte (5) und der Anzeigetafel (8) eine dehnbare Platte (10) so angeordnet ist, dass sie sich über den leicht zerbrechlichen Bereich (5b) erstreckt, und
die dehnbare Platte (10) in wenigstens zwei Bereichen, die durch den leicht zerbrechlichen Bereich (5b) getrennt sind, an dem beweglichen Körper (3) befestigt ist.

5. Die Anzeigevorrichtung in einem Fahrzeug nach Anspruch 4, **dadurch gekennzeichnet, dass**
eine Schutzplatte (9) so zwischen der Trägerplatte (5) und der dehnbaren Platte (10) angeordnet ist, dass sie sich über den leicht zerbrechlichen Bereich (5b) erstreckt, und
nur eine Seite der Schutzplatte (9) an dem beweglichen Körper (3) befestigt ist, wobei die eine Seite in Bezug auf den leicht zerbrechlichen Bereich (5b) definiert ist.

6. Die Anzeigevorrichtung in einem Fahrzeug nach einem der Ansprüche 1 bis 5, **dadurch gekennzeichnet, dass** der leicht zerbrechliche Bereich (5b) eine lange Rille ist, die auf einer Innenfläche der Trägerplatte (5) ausgebildet ist, und die einen nutenförmig ausgebildeten Querschnitt hat.

## Revendications

1. Appareil d'affichage embarqué comprenant un corps mobile (3) qui peut être rétracté dans et sorti d'une ouverture (1a) formée dans un élément d'installation (1) présent dans l'habitacle d'un véhicule et qui comprend une planche de support (5) et une partie de base (6) faisant saillie depuis une partie d'extrémité inférieure de la planche de support (5) ; un panneau d'affichage (8) de forme rectangulaire et fixé à une planche de support (5) du corps mobile (3) ; et un mécanisme d'entraînement (4) qui déplace le corps mobile (3) entre une position de rétraction, dans laquelle le corps mobile (3) est dans l'ouverture (1a), et une position de saillie, dans laquelle le corps mobile (3) fait saillie depuis l'ouverture (1a) dans une position verticale dans laquelle le panneau d'affichage (8) est tourné vers l'intérieur du véhicule,
l'appareil d'affichage embarqué étant **caractérisé en ce que** :
la planche de support (5) comporte une partie facilement cassable (5b) qui a une résistance mécanique inférieure à celle des autres parties de la planche de support (5) et qui s'étend substantiellement parallèlement à un bord inférieur du panneau d'affichage (8),
un élément formant ressort (11) est placé de façon à croiser la partie facilement cassable (5b), et
une première partie d'extrémité de l'élément formant ressort (11) est accrochée dans une région supérieure (S1) de la planche de support (5) et une deuxième partie d'extrémité de l'élément formant ressort (11) est accrochée sur la partie de base (6), ou sur une région inférieure (S2) de la planche de support (5), qui est séparée de la région supérieure (S1) par la partie facilement cassable (5b).

2. Appareil d'affichage embarqué selon la revendication 1, **caractérisé en ce que** l'élément formant ressort (11) est fourni en une pluralité et les éléments formant ressorts (11) sont des ressorts de traction hélicoïdaux disposés à l'intérieur par rapport à des bords latéraux correspondants du panneau d'affichage (8).

3. Appareil d'affichage embarqué selon la revendication 2, **caractérisé en ce que** :
la partie de base (6) fait saillie depuis une partie d'extrémité inférieure d'une surface arrière de la planche de support (5), et
des premières parties d'extrémité des ressorts de traction hélicoïdaux (11) sont accrochées à la planche de support (5) dans une première région (S1) et des deuxièmes parties d'extrémité des ressorts de traction hélicoïdaux (11) sont accrochées à la partie de base (6) dans la deuxième région (S2), respectivement.

4. Appareil d'affichage embarqué selon l'une quelconque des revendications 1 à 3, **caractérisé en ce que** :
une feuille étirable (10) est intercalée entre la planche de support (5) et le panneau d'affichage (8) de manière à s'étendre d'un bord à l'autre de la partie facilement cassable (5b), et
la feuille étirable (10) est fixée au corps mobile (3) dans au moins deux régions séparées par la partie facilement cassable (5b).

5. Appareil d'affichage embarqué selon la revendication 4, **caractérisé en ce que** :
une feuille de protection (9) est intercalée entre la planche de support (5) et la feuille étirable (10) de manière à s'étendre d'un bord à l'autre de la partie facilement cassable (5b), et
un seul côté de la feuille de protection (9) est fixé au corps mobile (3), ledit côté étant défini par rapport à la partie facilement cassable (5b).

6. Appareil d'affichage embarqué selon l'une quelconque des revendications 1 à 5, **caractérisé en ce que** la partie facilement cassable (5b) est une rainure longue formée sur une surface intérieure de la planche de support (5) et présentant une section transversale en forme d'évidement.
